(19)

Europäisches
Patentamt
European
Patent Office
Office européen
des brevets

(11) **EP 1 936 492 A1**

(12) **EUROPEAN PATENT APPLICATION**

(43) Date of publication:
**25.06.2008 Bulletin 2008/26**

(51) Int Cl.:
**G06F 9/302** (2006.01)

(21) Application number: **06127071.6**

(22) Date of filing: **22.12.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **TELEFONAKTIEBOLAGET LM
ERICSSON (publ)
164 83 Stockholm (SE)**

(72) Inventors:
• **Gustafsson, Harald
223 63 Lund (SE)**
• **Persson, Per
222 70 Lund (SE)**

(74) Representative: **Andersson, Björn E. et al
Ström & Gulliksson AB
P.O. Box 793
220 07 Lund (SE)**

(54) **SIMD processor with reduction unit**

(57)    A single-instruction multiple-data processor (10) comprises a plurality of lanes ($L_0$-$L_7$). The number of lanes is at least three. The single-instruction multiple-data processor further comprises a computation unit (20) operatively connected to all of the plurality of lanes ($L_0$-$L_7$). The computation unit (20) is adapted to perform a computational operation involving data elements from all of the plurality of lanes ($L_0$-$L_7$) and generate a single output data element based on a result of said computational operation. A method of processing data in the single-instruction multiple-data processor (10) is also disclosed.

Fig. 2

## EP 1 936 492 A1

**Description**

**Technical Field**

The present invention relates to a single-instruction multiple-data processor and a method of processing data in a single-instruction multiple-data processor.

**Background**

Some digital signal processing tasks allow a plurality of operations of the digital signal processing task to be executed in parallel. As an example, a finite-length impulse response (FIR) filter output computation may comprise computing the expression

$$y[n]=c_0 \cdot x[n] \ + \ c_1 \cdot x[n-1] \ + \ ... \ + \ c_k \cdot x[n-k]$$

where y[n] denotes the FIR filter output signal at sample instant n, x[n] denotes the FIR filter input signal at sample instant n, and $c_0$, $c_1$, ..., and $c_k$ are filter coefficients. The products $c_0 \cdot x[n]$, $c_1 \cdot x[n-1]$, ..., and $c_k \cdot x[n-k]$ may be computed in parallel.

If the plurality of operations to be executed in parallel are identical, as in the FIR filter example above where the operations to be performed in parallel are all multiplications, a single-instruction multiple-data (SIMD) processor may be utilized. A SIMD processor is adapted to execute the same operation on a plurality of data elements in parallel. An example of a SIMD processor is e.g. disclosed in US 2005/132165.

A SIMD processor is organized in parallel computation paths, normally referred to as lanes. For the FIR example above, the coefficient $c_0$ and input data x[n] may be placed in source registers associated with a first lane, the coefficient $c_1$ and the input data x[n-1] may be placed in a source register associated with a second lane, etc. The SIMD processor may perform a plurality of multiplications of the type $c_j \cdot x[n-j]$ in parallel during a single instruction cycle of the SIMD processor. The result of the multiplication in each lane may be placed in a destination register associated with that lane, or possibly, a destination register associated with another lane. The destination registers may e.g. be utilized as source registers in a subsequent instruction cycle of the SIMD processor. In other words, results from a SIMD operation or instruction may be used as operands during a subsequent instruction cycle. Additionally or alternatively, results may be written to a memory of the SIMD processor and/or operands may be fetched from the memory for the subsequent instruction cycle. Note that multiplication is used only as an example. Normally, a SIMD processor is capable of performing other arithmetic or logic operations on one or more operands, such as square-root operations, negation, addition, division, subtraction, bitwise logic operations, and/or shift operations, etc.

A result from one lane may be needed in computations in another lane during a subsequent instruction cycle. Therefore, a SIMD processor may be provided with instructions for rearranging data, e.g. by moving and/or copying data elements between the different lanes. To further enhance the flexibility, some SIMD processors are provided with a capability of performing neighboring-lane operations. That is, two adjacent lanes may share operands. For example, in a SIMD processor comprising eight lanes $L_0$, $L_1$, $L_2$, $L_3$, $L_4$, $L_5$, $L_6$, and $L_7$, lanes $L_0$ and $L_1$ may share operands, lanes $L_2$ and $L_3$ may share operands, lanes $L_4$ and $L_5$ may share operands, and lanes $L_6$ and $L_7$ may share operands.

Due to the parallelization, a SIMD processor facilitates a high data throughput. However, the latency associated e.g. with generating a scalar output in a SIMD processor may be relatively long. For e.g. some time-critical real-time digital signal processing applications, such long latency may be unacceptable. Hence, there is a need for a SIMD processor with reduced latency.

**Summary**

It is an object of the present invention to provide a single-instruction multiple-data processor with reduced latency..

According to a first aspect, a single-instruction multiple-data (SIMD) processor is provided. The SIMD processor comprises a plurality of lanes. The number of lanes is at least three. The SIMD processor further comprises a computation unit operatively connected to all of the plurality of lanes. The computation unit is adapted to perform a computational operation involving data elements from all of the plurality of lanes and generate a single output data element based on a result of said computational operation.

The computation unit may comprise a register adapted to store a data element. The computation unit may further comprise a computing device adapted to generate the single output data element based on the contents of the register and the result of said computational operation involving the data elements from all of the plurality of lanes.

The computation unit may be adapted to store the single-output data element in said register for providing an input to the computing device for another operation of the computation unit.

The computation unit may comprise an arithmetic logic unit.

The computation unit may be adapted to perform the computational operation as an addition of the data elements from all of the plurality of lanes.

The computation unit may be adapted to perform the computational operation as a multiplication of the data elements from all of the plurality of lanes.

The computation unit may be adapted to perform the computational operation as an addition of absolute values of the data elements from all of the plurality of lanes.

The computation unit may be adapted to perform the computational operation as a mean-value calculation of the data elements from all of the plurality of lanes.

The computation unit may be adapted to perform the computational operation as a comparison of the data elements from all of the plurality of lanes. Furthermore, the result of said comparison may be the maximum or the minimum data element among the data elements from all of the plurality of lanes.

The computation unit may be adapted to perform the computational operation as a bitwise logic operation on the data elements from all of the plurality of lanes. The bitwise logic operation may e.g. be a bitwise AND, NAND, OR, NOR, XOR, or XNOR operation on the data elements from all of the plurality of lanes.

According to a second aspect, an electronic apparatus comprises the SIMD processor. The electronic apparatus may be any of a portable or handheld mobile radio communication equipment, a mobile radio terminal, a mobile telephone, a pager, a communicator, an electronic organizer, a smartphone and a computer.

According to a third aspect, a method of processing data in a SIMD processor is provided. The SIMD processor comprises a plurality of lanes. The number of lanes is at least three. The method comprises performing a computational operation involving data elements from all of the plurality of lanes in a computation unit operatively connected to all of the plurality of lanes. The method further comprises generating a single output data element in said computation unit based on a result of said computational operation.

The step of generating may comprise generating the single output data element based on the contents of a register of the computation unit and the result of said computational operation involving the data elements from all of the plurality of lanes.

The method may further comprise storing the single-output data element in said register.

The computational operation may be an addition of the data elements from all of the plurality of lanes.

The computational operation may be a multiplication of the data elements from all of the plurality of lanes.

The computational operation may be an addition of absolute values of the data elements from all of the plurality of lanes.

The computational operation may be a mean-value calculation of the data elements from all of the plurality of lanes.

The computational operation may comprise comparing the data elements from all of the plurality of lanes and generating the maximum or the minimum data element among the data elements from all of the plurality of lanes.

The computational operation may be a bitwise logic operation on the data elements from all of the plurality of lanes. The bitwise logic operation may e.g. be a bitwise AND, NAND, OR, NOR, XOR, or XNOR operation on the data elements from all of the plurality of lanes.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

**Brief Description of the Drawings**

Further objects, features and advantages of the invention will appear from the following detailed description of the invention, reference being made to the accompanying drawings, in which:

Fig. 1 schematically illustrates execution of a multiply and accumulate operation in a conventional SIMD processor;
Fig. 2 is a block diagram of a SIMD processor according to an embodiment;
Figs. 3a and b are block diagrams of a computation unit according to an embodiment; and
Fig. 4 schematically illustrates execution of a multiply and accumulate operation in a SIMD processor according to an embodiment.

**Detailed Description**

In accordance with embodiments disclosed in this specification, the latency associated with a conventional SIMD processor may be reduced by means of a SIMD processor having a computational unit operatively connected to all lanes of the SIMD processor.

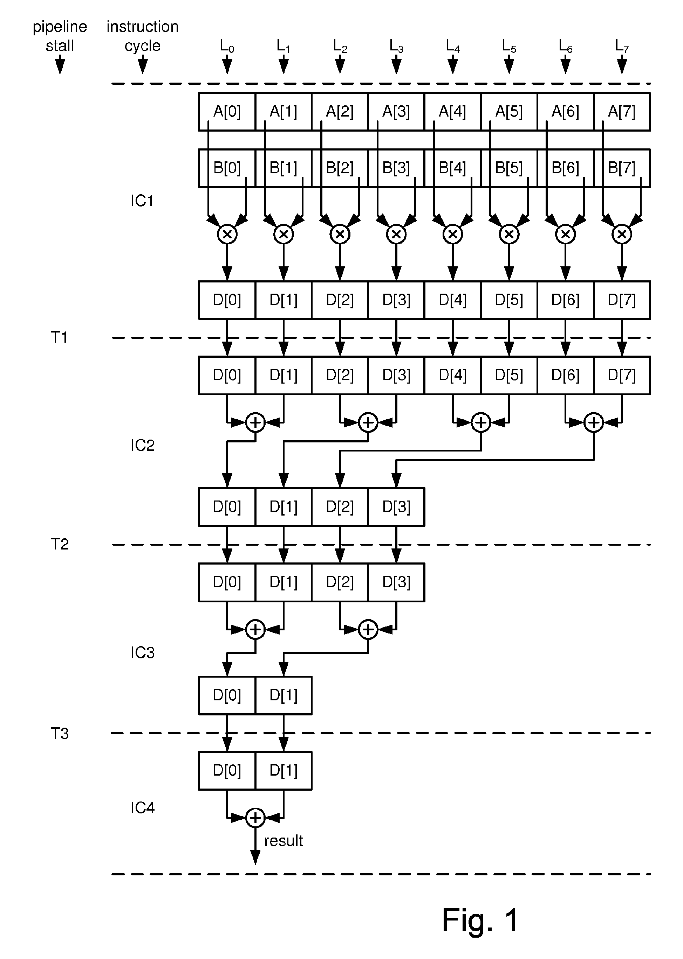

To facilitate the understanding of embodiments of the present invention, the execution of a multiply and accumulate operation in a conventional SIMD processor with support for neighboring-lane operations is illustrated in Fig. 1. Input data for the multiply and accumulate operation is initially stored in registers A[i] and B[i], where i is an integer in the set {0,1,2,...,6,7}. The integer i indicates to which lane a register is associated. For example, registers A[0] and B[0] are associated with a lane $L_0$, registers A[1] and B[1] are associated with a lane $L_1$, etc. Hence, in the example, a SIMD processor with eight lanes may be used. The object of the multiply and accumulate operation, according to this example, is to multiply the content of A[i] with the content of B[i] and generate the sum of the resulting eight products.

As illustrated in Fig. 1, during a first instruction cycle IC1 of the SIMD processor, the product A[0]·B[0] is generated in lane $L_0$ and the result is stored in a register D[0], the product A[1]·B[1] is generated in lane $L_1$ and the result is stored in a register D[1], etc. Hence, eight multiplications are performed in parallel in the SIMD processor. The multiplications may e.g. be performed by an arithmetic-logic unit (ALU) of each lane $L_0$-$L_7$.

During a second instruction cycle IC2 of the SIMD processor, neighboring-lane operations are performed. The content of D[0], which is associated with the lane $L_0$, is added with the content of D[1], which is associated with the lane $L_1$. The addition may be performed e.g. with the ALU of either lane $L_0$ or lane $L_1$. The result of the addition is written to the register D[0]. The content of D[2], which is associated with the lane $L_2$, is added with the content of D[3], which is associated with the lane $L_3$. The addition may be performed e.g. with the ALU of either lane $L_2$ or lane $L_3$. The result of the addition is written to the register D[1]. The content of D[4], which is associated with the lane $L_4$, is added with the content of D[5], which is associated with the lane $L_5$. The addition may be performed e.g. with the ALU of either lane $L_4$ or lane $L_5$. The result of the addition is written to the register D[2]. The content of D[6], which is associated with the lane $L_6$, is added with the content of D[7], which is associated with the lane $L_7$. The addition may be performed e.g. with the ALU of either lane $L_6$ or lane $L_7$. The result of the addition is written to the register D[3]. Hence, during the second instruction cycle of the SIMD processor, four additions are performed in parallel.

During a third instruction cycle IC3 of the SIMD processor, neighboring-lane operations are performed. The content of D[0] is added with the content of D[1]. The addition may be performed e.g. with the ALU of either lane $L_0$ or lane $L_1$. The result of the addition is written to the register D[0]. The content of D[2] is added with the content of D[3]. The addition may be performed e.g. with the ALU of either lane $L_2$ or lane $L_3$. The result of the addition is written to the register D[1]. Hence, during the third instruction cycle of the SIMD processor, two additions are performed in parallel.

Finally, during a fourth instruction cycle IC4 of the SIMD processor, a single neighboring-lane operation is performed. The content of D[0] is added with the content of D[1]. The addition may be performed e.g. with the ALU of either lane $L_0$ or lane $L_1$. The result of the addition is written to the register D[0].

According to the above example, it takes four instruction cycles to generate the result of the multiply and accumulate operation.

Some SIMD processors (and other types of processors) employ a pipelined architecture. In a pipelined architecture, several instructions may be executed at the same time in the same lane, but in different stages of the pipeline. For example, a first instruction may be in the stage of storing results from ALU operations in registers. A second instruction, which is subsequent to the first instruction, may be in the stage of processing data within the ALUs. A third instruction, which is subsequent to the second instruction, may be in the stage of inputting data to the ALUs. A fourth instruction, which is subsequent to the third instruction, may be in the stage of fetching data from a memory, etc.

In a pipelined architecture, an instruction takes a plurality of clock cycles of the pipeline to be executed. A clock cycle of the pipeline will in the following be referred to as a pipeline cycle. Pipelined architectures facilitates issuing instructions at a relatively high rate. For example, a pipelined architecture may facilitate that one instruction is issued for each pipeline cycle. However, when the result of an instruction is needed by a subsequent instruction, the pipelined architecture may not be fully utilized. As an example, the instructions executed in Fig. 1 are considered in the following.

The instruction executed during the instruction cycle IC2 (in the following referred to as the IC2 instruction), i.e. the neighboring-lane addition executed during IC2, requires the result from the instruction executed during the instruction cycle IC1 (in the following referred to as the IC1 instruction), i.e. the in-lane multiplication executed during IC1, as input. Hence, before the IC2 instruction can be executed, the IC1 instruction must be completed and the result thereof transferred to, or written back to, the beginning of the pipeline. Therefore, the pipeline needs to be stalled during a number of pipeline cycles before the IC2-instruction can be executed. Thereby, so called bubbles are created in the pipeline, and the pipeline is not fully utilized.

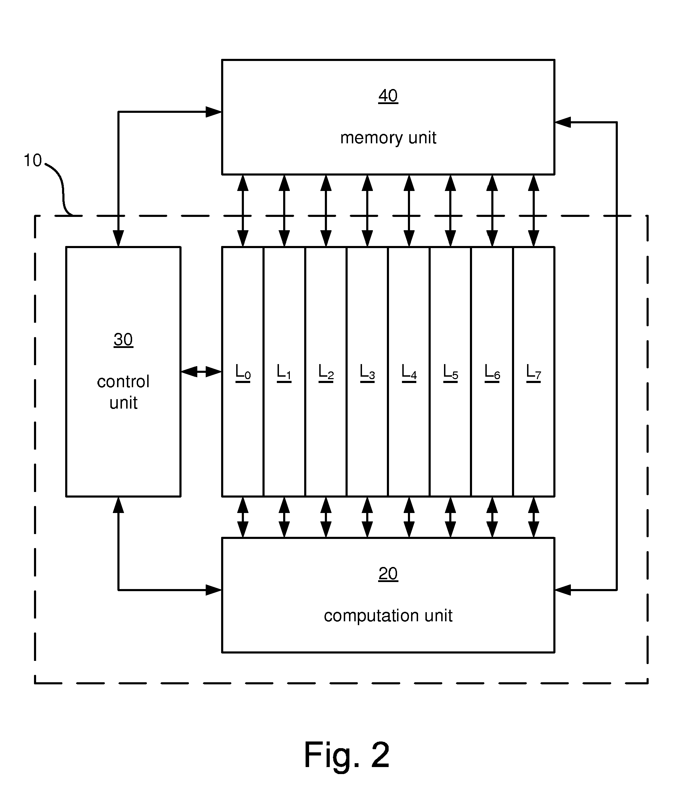

In a similar way, the instruction executed during the instruction cycle IC3 (in the following referred to as the IC3 instruction) requires the result from the IC2 instruction as input. Therefore, the pipeline needs to be stalled during a number of clock cycles before the IC3 instruction can be executed. Furthermore, the instruction executed during the instruction cycle IC4 (in the following referred to as the IC4 instruction) requires the result from the IC3 instruction as input. Therefore, the pipeline also needs to be stalled during a number of clock cycles before the IC4 instruction can be executed. In Fig. 2, it is indicated that, in a pipelined architecture, the pipeline is stalled during T1, T2, and T3 pipeline cycles between the execution of the IC1 instruction and the execution of the IC2 instruction, the execution of the IC2 instruction and the execution of the IC3 instruction, and the execution of the IC3 instruction and the execution of the IC4 instruction, respectively. Quantitative values of T1, T2, and T3 depends on the implementation of the SIMD processor. Also dependent on the implementation, T1, T2, and T3 may or may not be equal.

Fig. 2 shows a block diagram of a SIMD processor 10 according to an embodiment. According to the embodiment, the SIMD processor 10 comprises a plurality of lanes $L_0$-$L_7$. For the SIMD processor 10 illustrated in Fig. 2, the number of lanes is eight. Further, the SIMD processor 10 comprises a computation unit 20 operatively connected to all of the plurality of lanes $L_0$-$L_7$. The computation unit 20 is adapted to receive data elements from all of the plurality of lanes. The computation unit 20 is adapted to generate a single output data element based on the data elements from all of the plurality of lanes. The computation unit 20 is adapted to generate the single output data element by performing a computational operation that involves the data elements from all of the plurality of lanes $L_0$-$L_7$.

According to some embodiments, the computation unit 20 is adapted to perform a single (fixed) computational operation. For these embodiments, the computation unit 20 is referred to as a fixed computation unit in this specification.

According to other embodiments, the computation unit is adapted to perform a plurality of computational operations. Which of the plurality of computational operations that is performed may e.g. be controlled by means of a software instruction executed on the SIMD processor 10. For these embodiments, the computation unit 20 is referred to as a controllable computation unit in this specification.

As illustrated in Fig. 2, the SIMD processor 10 may further comprise a control unit 30. The control unit 30 may be adapted to control the operation of elements of the lanes $L_0$-$L_7$ and the computation unit 20, e.g. in response to software instructions. Moreover, the SIMD processor 10 may be operatively connected to a memory unit 40 for storing data and/or software instructions of the SIMD processor. The memory unit 40 may e.g. comprise one or more physical read/write memories, such as random access memories (RAM), and/or read-only memories (ROM). The memory unit 40 may be operatively connected to the control unit 40, the plurality of lanes $L_0$-$L_7$, and/or the computation unit 20 for transfer of data and/or software instructions.

According to some embodiments, the computation unit 20 is adapted to perform an addition of the data elements from all of the plurality of lanes. Hence, the single output data element may be the sum of the data elements from all of the plurality of lanes. This is e.g. useful in a multiply and accumulate operation, as in the example given above with reference to Fig. 1.

According to some embodiments, the computation unit 20 is adapted to perform a multiplication of the data elements from all of the plurality of lanes. Hence, the single output data element may be the product of the data elements from all of the plurality of lanes. In order to retain full precision for the resulting product, the number of bits needed to represent the product is equal to the sum of the numbers of bits representing each factor. Hence, the number of bits needed to represent the product increases linearly with the number of lanes. Therefore, for a large number of lanes, it may be impractical to perform a multiplication of the data elements from all of the plurality of lanes.

According to some embodiments, the computation unit 20 is adapted to perform an addition of absolute values of the data elements from all of the plurality of lanes. Hence, the single output data element may be the sum of absolute values of the data elements from all of the plurality of lanes. This is e.g. useful for calculating an $L^1$ norm. As a nonlimiting example, in some video compression applications, the $L^1$ norm may be utilized to derive so called motion vectors. Each image frame of a video sequence may be divided into a number of smaller image areas, known as macro blocks, which are individually compressed. To exploit similarities between subsequent image frames, the difference between the content (e.g. luminance and chrominance data) of a macro block and the content of an image area of a previous image frame of the video sequence may be compressed rather than the content of macro block itself. The motion vector is the difference between coordinates of said macro block and coordinates of said image area of said previous image frame. An image area of the previous image frame, and consequently a motion vector, may be selected by means of calculating the $L^1$ norm of the difference between the content of the macro block and the content of an image area of the previous image frame for a plurality of image areas. This $L^1$ norm is sometimes referred to as the sum of absolute differences (SAD). The image area of the plurality of image areas that results in the smallest SAD may then be selected.

According to some embodiments, the computation unit 20 is adapted to perform a mean-value calculation of the data elements from all of the plurality of lanes. Hence, the single output data element may be the mean value of the data elements from all of the plurality of lanes. The mean-value calculation may e.g. be performed by adding the data elements from all of the plurality of lanes and dividing the resulting sum with the number of lanes (or multiplying the resulting sum with the reciprocal of the number of lanes). If the number of lanes is a power of two, i.e. $2^K$ where K is an integer, the division with the number of lanes may be efficiently performed by shifting said resulting sum K bit positions.

According to some embodiments, the computation unit 20 is adapted to compare the data elements from all of the plurality of lanes. The computation unit 20 may e.g. be adapted to output the maximum or the minimum data element among the data elements as a result of such a comparison. Hence, the single output data element may be the maximum or the minimum of the data elements from all of the plurality of lanes.

According to some embodiments, the computation unit 20 is adapted to perform a bitwise logic operation on the data elements from all of the plurality of lanes. Hence, the single output data element may be the result of the bitwise logic operation on data elements from all of the plurality of lanes. The bitwise-logic operation may e.g. be, but is not limited to, a bitwise AND, NAND, OR, NOR, XOR, and/or XNOR operation.

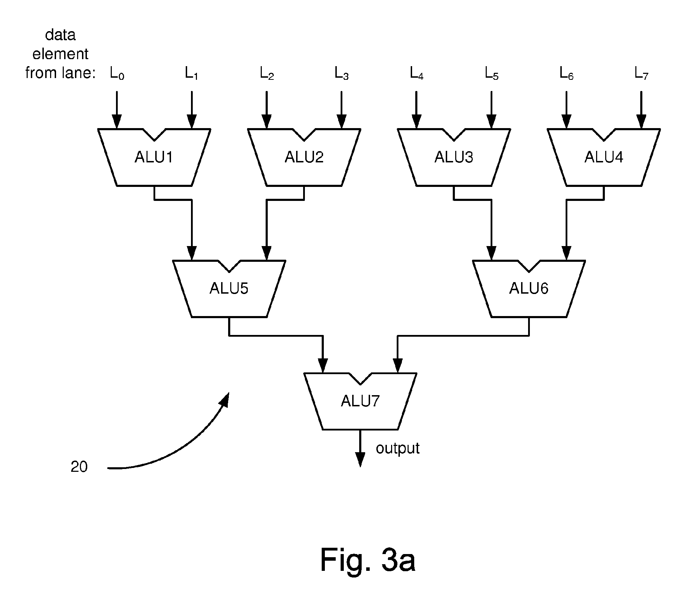

The computation unit 20 may comprise one or more arithmetic logic units (ALUs) for performing the computational operation. Fig. 3a is a block diagram of the computation unit 20 according to an embodiment. According to this embodiment, the computation unit 20 comprises a plurality of ALUs ALU1-ALU7 connected in a balanced binary tree arrangement. For the embodiment illustrated in Fig. 3a, the number of ALUs in the binary tree is seven, making it suitable for an eight-lane SIMD processor. For implementation of the computation unit 20, ALUs may be arranged in various other ways. The ALUs ALU1-ALU7 may e.g. be controlled by the control unit 20 (Fig. 2).

For performing an addition of the data elements from all of the plurality of lanes, each of the ALUs ALU1-ALU7 may be controlled to perform an addition of the operands input to the ALU.

For performing a multiplication of the data elements from all of the plurality of lanes, each of the ALUs ALU1-ALU7 may be controlled to perform a multiplication of the operands input to the ALU.

For performing an addition of absolute values of the data elements from all of the plurality of lanes, each of the ALUs ALU1-ALU7 may be controlled to perform an addition of absolute values of the operands input to the ALU. Alternatively, each of the ALUs ALU1-ALU4 may be controlled to perform an addition of absolute values of the operands input to the ALU, and each of the ALUs ALU5-ALU7 may be controlled to perform an addition of the operands input to the ALU.

For performing a mean-value calculation of the data elements from all of the plurality of lanes, each of the ALUs ALU1-ALU7 may be controlled to perform a mean-value calculation of the operands input to the ALU. For example, each of the ALUs ALU1-ALU7 may be controlled to perform an addition of the operands input to the ALU and perform a shift of one bit position on the resulting sum, thereby dividing said resulting sum with a factor two. Alternatively, each of the ALUs ALU1-ALU6 may be controlled to perform an addition of the operands input to the ALU, and the ALU ALU7 may be adapted to perform an addition of the operands input to it and perform a shift of three bit positions to the resulting sum, thereby dividing said resulting sum with a factor eight. Various other alternatives are also possible.

For performing a bitwise logic operation on the data elements from all of the plurality of lanes, each of the ALUs ALU1-ALU7 may be controlled to perform said bitwise logic operation on the operands input to the ALU.

For performing a comparison of the data elements from all of the plurality of lanes and outputting the maximum value of said data elements, each of the ALUs ALU1-ALU7 may be controlled to perform a comparison of the operands input to the ALU and output the maximum value of said operands. Similarly, for performing a comparison of the data elements from all of the plurality of lanes and outputting the minimum value of said data elements, each of the ALUs ALU1-ALU7 may be controlled to perform a comparison of the operands input to the ALU and output the minimum value of said operands.

According to some embodiments, the computation unit 20 is adapted to generate the single output data element based on the data elements from all of the plurality of lanes and an additional data element. For example, the additional data element may be a scaling factor. The computation unit 20 may be adapted to generate the single output data element by performing a computational operation on the data elements from all of the plurality of lanes and multiplying or dividing the result of the computational operation with the scaling factor.

As another example, the additional data element may be an offset value. The computation unit 20 may be adapted to generate the single output data element by performing a computational operation on the data elements from all of the plurality of lanes and adding the offset value to the result of the computational operation.

As yet another example, the additional data element may be a result from a previous operation performed in the computation unit 20. The computation unit 20 may e.g. be adapted to generate the single output data element by performing a computational operation on the data elements from all of the plurality of lanes and adding said result from said previous operation to the result of the computational operation. Thereby, accumulation of results generated in the computation unit 20 is facilitated. The accumulation can be performed within the computation unit 20, e.g. without having to write back any data to the beginning of the pipeline in a pipelined SIMD processor.

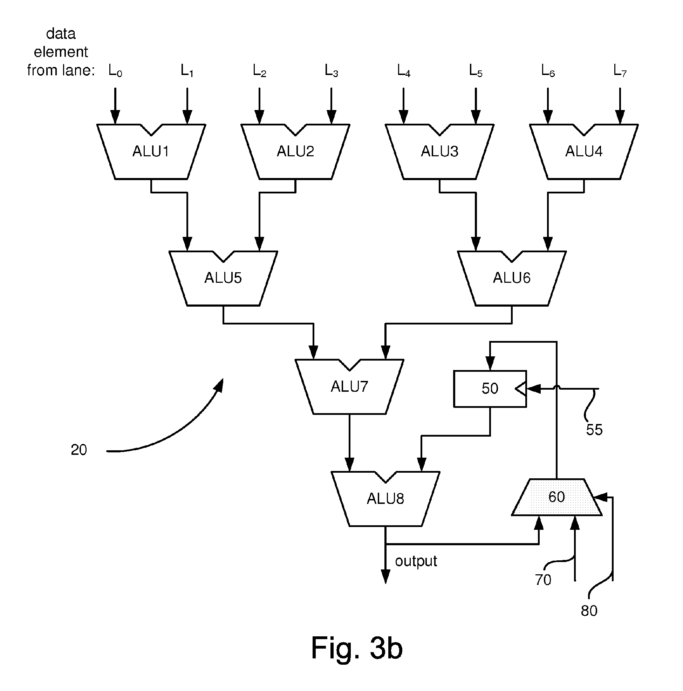

Fig. 3b is a block diagram of the computation unit 20 according to an embodiment. The computation unit 20 according to this embodiment is adapted generate the single output data element based on the data elements from all of the plurality of lanes and an additional data element, e.g. in accordance with the examples outlined above. In comparison with the embodiment of the computation unit 20 illustrated in Fig. 3a, the computation unit 20 illustrated in Fig. 3b comprises an additional ALU ALU8. The output of the ALU ALU7 is supplied as a first operand to the ALU ALU8, as indicated in Fig. 3b. The computation unit 20, according to this embodiment, further comprises a register 50 adapted to store the additional data element. The additional data element is supplied from the register 50 as a second operand to the ALU ALU8. The register 50 may be controlled by the control unit 30 (Fig. 2). For example, the control unit 30 may be adapted to set or reset the register 50 by means of control signals (not indicated in Fig. 3b). Additionally or alternatively, the control unit 30 may be adapted to supply a "clock" signal or "load" signal to the register 50 on the clock terminal 55 of the register 50 when the register 50 is to be loaded with a new data element.

Moreover, according to this embodiment, the computation unit 20 further comprises a multiplexer (MUX) 60. The output from the ALU ALU8 is supplied to a first input port of the MUX 60. A data element from an external source, such as the control unit 30 (Fig. 2), may be supplied to a second input port 70 of the MUX 60. By means of the MUX 60, the register 50 may be loaded either with the output from the ALU8 or with said data element supplied to the second input port 70 of the MUX 60. Which of the output from the ALU ALU8 or the data element supplied to the second input port 70 of the MUX 60 that is supplied to the register 50 can be controlled, e.g. by the control unit 30 (Fig. 2) via a control terminal 80 of the MUX 60.

The embodiments illustrated in Fig. 3a and b are examples of controllable computation units. Embodiments of various fixed computation units may be obtained in similar ways. Each ALU ALU1-ALU7 of Fig. 3a or ALU1-ALU8 of Fig. 3b may e.g. be replaced with fixed units, such as fixed adders, multipliers, logic units, etc. For example, a fixed computation unit adapted to perform an addition of the data elements from all of the plurality of lanes may be obtained by replacing each of the ALUs ALU1-ALU7 in Fig. 3a with a fixed adder circuit, etc.

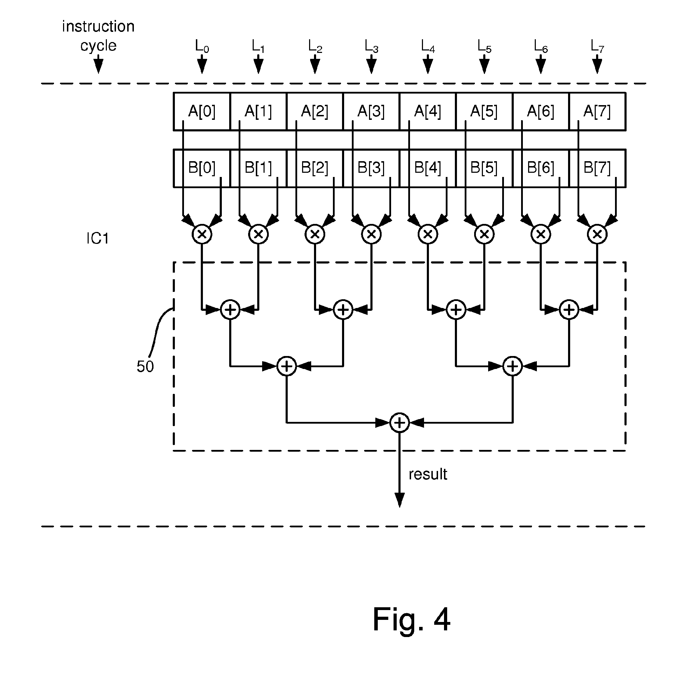

To illustrate advantages of embodiments disclosed herein, execution of a multiply and accumulate operation in the SIMD processor 10 comprising the computation unit 20, e.g. according to the embodiment illustrated in Fig. 3a, is schematically illustrated in Fig. 4 in accordance with an example. As in the example presented with reference to Fig. 1, the product $A[0] \cdot B[0]$ is generated in lane $L_0$, the product $A[1] \cdot B[1]$ is generated in lane $L_1$, etc., during a first instruction cycle IC1 of the SIMD processor 20. During the same instruction cycle IC1 of the SIMD processor, the products generated in the lanes $L_0$-$L_7$ are added in the computation unit 20. The operations performed by the computation unit 20 are schematically illustrated in the box 50. In accordance with this example, the multiply and accumulate operation can be performed during a single instruction cycle. Hence, compared with the example presented with reference to Fig. 1, wherein a conventional SIMD processor with support for neighboring-lane operation was utilized, the latency of the multiply and accumulate operation is substantially reduced.

Furthermore, in embodiments wherein the SIMD processor 10 has a pipelined architecture, stalling of the pipeline during the multiply and accumulate operation can be avoided by means of the computation unit 20. This is because, even though the result of the multiplication is required as input to the addition (box 50, Fig. 4), there is no need for write back of any intermediate results to the SIMD pipeline, because this addition is performed by the computation unit 20. Hence, latency due to a stalled pipeline can be avoided. The length of the instruction cycle IC1 in Fig. 4, e.g. in terms of number of pipeline cycles, may be longer than for any of the instruction cycles IC1-IC4 in Fig. 1, due to that both a multiplication operation and an addition operation are performed. However, the total time required for the complete multiply and accumulate operation is considerably shorter in the example of Fig. 4 than in the example of Fig. 1, e.g. because no write-back of intermediate results to the beginning of the pipeline is required. Furthermore, since the pipeline is not stalled during the multiply and accumulate operation in the example of Fig. 4, other instructions (that do not depend on the result from the multiply and accumulate operation) may be executed in the pipeline during execution of the multiply and accumulate operation. Thereby, an improved overall efficiency of the utilization of the pipeline is obtained.

Furthermore, to illustrate utilization of the embodiment of the computation unit 20 illustrated in Fig. 3b, a finite-length impulse response (FIR) filter calculation is used as an example. The output sample y[n] at sample instant n of the FIR filter is given by

$$y[n] = c_0 \cdot x[n] + c_1 \cdot x[n-1] + \dots + c_k \cdot x[n-k]$$

where x[n] denotes the FIR filter input signal at sample instant n and $c_0$, $c_1$, ..., and $c_k$ are filter coefficients. If the number of coefficients, i.e. k+1, is larger than the number of lanes in the SIMD processor, all the products $c_j \cdot x[n-j]$ cannot be generated during a single instruction cycle. Instead, several instruction cycles are required for generating all of said products.

According to an exemplary embodiment, wherein the number of lanes is eight and the number of FIR filter coefficients is 32, the FIR calculation may be performed as follows. According to this embodiment, the register 50 (Fig. 3b) serves as a storage for an intermediate-result variable. The intermediate-result variable is initially set to zero. This may e.g. be carried out by resetting the register 50. Alternatively, a "zero" may be supplied to the second input port of the MUX 60 (Fig. 3b) and forwarded to the register 50 by appropriately controlling the MUX 60 via the control terminal 80. Then, the "zero" can be loaded into the register 50 by supplying a "load" signal to the clock terminal 55 of the register 50.

In a first instruction cycle, the products $c_j \cdot x[n-j]$ are generated in parallel in the lanes $L_0$-$L_7$ (Fig. 2) for j = 0, 1,..., 7. The sum of the products is generated by the ALUs ALU1-ALU7 of computation unit 20. The value of the intermediate-result variable, i.e. the content of the register 50, which is zero at this stage, is added to the sum by means of the ALU ALU8. Thereby, a first intermediate result is generated. The MUX 60 is controlled via the control terminal 80 to forward the output of the ALU ALU8, i.e. the first intermediate result, to the register 50. The first intermediate result is loaded into the register 50 by supplying a "load" signal to the clock terminal 55 of the register 50. Thereby, the first intermediate result is assigned to the intermediate-result variable.

In a second instruction cycle, the products $c_j \cdot x[n-j]$ are generated in parallel in the lanes $L_0$-$L_7$ (Fig. 2) for j = 8, 9,..., 15. The sum of the products is generated by the ALUs ALU1-ALU7 of computation unit 20. The value of the intermediate-result variable, i.e. the content of the register 50, which at this stage equals the sum of the products $c_j \cdot x[n-j]$ for j = 0, 1,..., 7, is added to the sum by means of the ALU ALU8. Thereby, a second intermediate result is generated. The MUX 60 is controlled via the control terminal 80 to forward the output of the ALU ALU8, i.e. the second intermediate result, to the register 50. The second intermediate result is loaded into the register 50 by supplying a "load" signal to the clock terminal 55 of the register 50. Thereby, the second intermediate result is assigned to the intermediate-result variable.

In a third instruction cycle, the products $cj \cdot x[n-j]$ are generated in parallel in the lanes $L_0$-$L_7$ (Fig. 2) for j = 16, 17,..., 23. The sum of the products is generated by the ALUs ALU1-ALU7 of computation unit 20. The value of the intermediate-result variable, i.e. the content of the register 50, which at this stage equals the sum of the products $c_j \cdot x[n-j]$ for j = 0, 1,..., 15, is added to the sum by means of the ALU ALU8. Thereby, a third intermediate result is generated. The MUX 60 is controlled via the control terminal 80 to forward the output of the ALU ALU8, i.e. the third intermediate result, to the register 50. The third intermediate result is loaded into the register 50 by supplying a "load" signal to the clock terminal 55 of the register 50. Thereby, the third intermediate result is assigned to the intermediate-result variable.

In a fourth instruction cycle, the products $c_j \cdot x[n-j]$ are generated in parallel in the lanes $L_0$-$L_7$ (Fig. 2) for j = 24, 25,..., 31. The sum of the products is generated by the ALUs ALU1-ALU7 of computation unit 20. The value of the intermediate-result variable, i.e. the content of the register 50, which at this stage equals the sum of the products $c_j \cdot x[n-j]$ for j = 0, 1,..., 23, is added to the sum by means of the ALU ALU8. Thereby, the FIR filter output sample y [n] is generated. By means of the ALU ALU8 and the register 50, the sums of eight products generated in each of the first, second, third, and fourth instruction cycles can be accumulated to generate the FIR filter output sample y[n]. In embodiments wherein the SIMD processor 10 has a pipelined architecture, this is obtained without having to write back any intermediate result to the beginning of the pipeline, which is an advantage.

By means of a computation unit, such as the computation unit 20 (Fig. 2), according to embodiments disclosed herein, the latency of operations that involve generating a single output data element based on data elements from all lanes of a SIMD processor can be substantially reduced, which is an advantage. Further, for a pipelined SIMD architecture, said computation unit may improve the efficiency of the utilization of the pipeline, since stalling of the pipeline may be required less frequently, which is also an advantage.

It is a further advantage that a higher precision may be obtained for the single output data element output from the computation unit than if the single output data element would have been generated in a conventional SIMD processor. In a conventional SIMD processor, the precision of the single output data element, and intermediate results (such as the sums generated in the instruction cycles IC2 and IC3 in the example of Fig. 1) is limited by the width (number of bits) of the registers in each lane. Therefore, the single output data element and the intermediate results may need to be rounded or truncated. In e.g. the embodiment of the computation unit 20 illustrated in Fig. 3a, the number of bits output from each ALU ALU1-ALU7 may be higher than the number of bits of each input of the ALU. For example, the ALUs ALU1-ALU4 may have K-bit inputs and L-bit outputs, where L > K. The ALUs ALU5 and ALU6 may have L-bit inputs and M-bit outputs, where M > L. The ALU ALU7 may have M-bit inputs and an N-bit output, where N > M. In other words, the number of bits representing a data element may grow with each level of the binary tree. Thereby truncation or rounding may be avoided. Alternatively, the errors introduced by rounding or truncation may be smaller than for a conventional SIMD processor.

Compared with a conventional SIMD processor, additional circuit area is required due to the computation unit 20. However, for embodiments disclosed in this specification, the register utilization may be made more efficient than for a conventional SIMD processor. For example, in the example presented with reference to Fig. 4, no registers are required for temporary storage of results from multiplications or additions. This is in contrast to the example presented with reference to Fig. 1, where the registers D[i] are used for such temporary storage of results. Due to the improved efficiency in register utilization, less registers may be required than in a conventional SIMD processor. In embodiments where the number of registers is reduced compared with a conventional SIMD processor, the reduction in number of registers to some extent compensates for the additional circuit area required for the computation unit 20.

In the embodiments and examples disclosed above, the number of lanes in the SIMD processor 10 is eight. It should be noted that the number eight is only an example. According to some embodiments, the number of lanes is at least three. According to some embodiments, the number of lanes is at least four. According to some embodiments, the number of lanes is $2^K$, where $K \geq 2$ is an integer, i.e. the number of lanes is any of 4, 8, 16, 32, etc.

A SIMD processor according to embodiments disclosed in this specification may be comprised in an electronic apparatus. The electronic apparatus may e.g. be, but is not limited to, any of a portable or handheld mobile radio communication equipment, a mobile radio terminal, a mobile telephone, a pager, a communicator, an electronic organizer, a smartphone and a computer.

According to some embodiments, a method of processing data in the SIMD processor 10 is provided. According to embodiments, the method comprises performing a computational operation involving data elements from all of the plurality of lanes $L_0$-$L_7$ in the computation unit 20. According to embodiments, the method further comprises generating a single output data element in the computation unit 20 based on a result of said computational operation. The computational operation may e.g. be any of the computational operations described above in connection to embodiments of the computation unit 20.

The present invention has been described above with reference to specific embodiments. However, other embodiments than the above described are possible within the scope of the invention. Different method steps than those described above may be provided within the scope of the invention. The different features and steps of the invention may be combined in other combinations than those described. The scope of the invention is only limited by the appended patent claims.

**Claims**

1. A single-instruction multiple-data processor (10) comprising
   a plurality of lanes ($L_0$-$L_7$), the number of lanes in the plurality of lanes ($L_0$-$L_7$) being at least three;
   **characterized by**
   a computation unit (20) operatively connected to all of the plurality of lanes ($L_0$-$L_7$), adapted to perform a computational operation involving data elements from all of the plurality of lanes ($L_0$-$L_7$) and generate a single output data element based on a result of said computational operation.

2. The single-instruction multiple-data processor according to claim 1, wherein the computation unit (20) comprises a register (50) adapted to store a data element; and a computing device (ALU8) adapted to generate the single output data element based on the contents of the register (50) and the result of said computational operation involving the data elements from all of the plurality of lanes ($L_0$-$L_7$).

3. The single-instruction multiple-data processor according to claim 2, wherein the computation unit (20) is adapted to store the single-output data element in the register (50) for providing an input to the computing device (ALU8) for another operation of the computation unit (20).

4. The single-instruction multiple-data processor (10) according to any of the preceding claims, wherein the computation unit (20) comprises an arithmetic logic unit (ALU1-ALU8).

5. The single-instruction multiple-data processor (10) according to any of the preceding claims, wherein the computation unit (20) is adapted to perform the computational operation as an addition of the data elements from all of the plurality of lanes ($L_0$-$L_7$).

6. The single-instruction multiple-data processor (10) according to any of the preceding claims, wherein the computation unit (20) is adapted to perform the computational operation as a multiplication of the data elements from all of the plurality of lanes ($L_0$-$L_7$).

7. The single-instruction multiple-data processor (10) according to any of the preceding claims, wherein the computation unit (20) is adapted to perform the computational operation as an addition of absolute values of the data elements from all of the plurality of lanes ($L_0$-$L_7$).

8. The single-instruction multiple-data processor (10) according to any of the preceding claims, wherein the computation unit (20) is adapted to perform the computational operation as a mean-value calculation of the data elements from all of the plurality of lanes ($L_0$-$L_7$).

9. The single-instruction multiple-data processor (10) according to any of the preceding claims, wherein the computation unit (20) is adapted to perform the computational operation as a comparison of the data elements from all of the plurality of lanes ($L_0$-$L_7$) and the result of said comparison is the maximum or the minimum data element among the data elements from all of the plurality of lanes ($L_0$-$L_7$).

10. The single-instruction multiple-data processor (10) according to any of the preceding claims, wherein the computation unit (20) is adapted to perform the computational operation as a bitwise logic operation on the data elements from all of the plurality of lanes ($L_0$-$L_7$).

11. The single-instruction multiple-data processor (10) according to claim 10, wherein the bitwise logic operation is a bitwise AND, NAND, OR, NOR, XOR, or XNOR operation on the data elements from all of the plurality of lanes ($L_0$-$L_7$).

12. An electronic apparatus comprising a single-instruction multiple-data processor (10) according to any of the preceding claims.

13. The electronic apparatus according to claim 12, wherein the electronic apparatus is a portable or handheld mobile radio communication equipment, a mobile radio terminal, a mobile telephone, a pager, a communicator, an electronic organizer, a smartphone or a computer.

14. A method of processing data in a single-instruction multiple-data processor (10) comprising a plurality of lanes ($L_0$-$L_7$), wherein the number of lanes in the plurality of lanes ($L_0$-$L_7$) is at least three
    **characterized by**
    performing a computational operation involving data elements from all of the plurality of lanes in a computation unit (20) operatively connected to all of the plurality of lanes; and
    generating a single output data element in said computation unit (20) based on a result of said computational operation.

15. The method according to claim 14, wherein the step of generating comprises
    generating the single output data element based on the contents of a register (50) of the computation unit (20) and the result of said computational operation.

16. The method according to claim 15, further comprising
    storing the single-output data element in the register (50).

17. The method according to any of the claims 14-16, wherein the computational operation is an addition of the data elements from all of the plurality of lanes ($L_0$-$L_7$).

18. The method according to any of the claims 14-16, wherein the computational operation is a multiplication of the data elements from all of the plurality of lanes ($L_0$-$L_7$).

19. The method according to any of the claims 14-16, wherein the computational operation is an addition of absolute values of the data elements from all of the plurality of lanes ($L_0$-$L_7$).

20. The method according to any of the claims 14-16, wherein the computational operation is a mean-value calculation of the data elements from all of the plurality of lanes during ($L_0$-$L_7$).

21. The method according to claim any of the claims 14-16, wherein the computational operation comprises
    comparing the data elements from all of the plurality of lanes ($L_0$-$L_7$) ;
    generating the maximum or the minimum data element among the data elements from all of the plurality of lanes ($L_0$-$L_7$).

22. The method according to any of the claims 14-16, wherein the computational operation is a bitwise logic operation on the data elements from all of the plurality of lanes ($L_0$-$L_7$).

23. The method according to claim 22, wherein the bitwise logic operation is a bitwise AND, NAND, OR, NOR, XOR, or XNOR operation.

Fig. 1

Fig. 2

Fig. 3a

Fig. 3b

Fig. 4

**European Patent Office**

**EUROPEAN SEARCH REPORT**

Application Number

EP 06 12 7071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ACKLAND B ET AL: "A Single-Chip, 1.6-Billion, 16-b MAC/s Multiprocessor DSP" IEEE JOURNAL OF SOLID-STATE CIRCUITS, IEEE SERVICE CENTER, PISCATAWAY, NJ, US, vol. 35, no. 3, March 2000 (2000-03), XP011061192 ISSN: 0018-9200 * page 414, left-hand column, paragraph 3; figure 7b * * page 414, right-hand column, paragraph 5 * | 1-23 | INV. G06F9/302 |
| X | SCHULTE M ET AL: "A low-power multithreaded processor for baseband communication systems" LECTURE NOTES IN COMPUTER SCIENCE, SPRINGER VERLAG, BERLIN, DE, vol. 3133, 2004, pages 393-402, XP002374989 ISSN: 0302-9743 * page 399, paragraph 1; figure 5 * | 1-23 | |
| X | US 7 085 797 B2 (KNOWLES SIMON [GB]) 1 August 2006 (2006-08-01) * column 1, lines 31-41; figure 1 * | 1,12,14 | **TECHNICAL FIELDS SEARCHED (IPC)** G06F |
| A | HENNESSY J; PATTERSON D A: "Computer Architecture - A quantative approach" June 2002 (2002-06), MORGAN KAUFMANN , USA , XP002421551 ISBN: 1-55-860724-2 * pages 109-111 * | 6-11, 18-23 | |

-/--

The present search report has been drawn up for all claims

| Place of search | Date of completion of the search | Examiner |
|---|---|---|
| Munich | 23 February 2007 | Kamps, Stefan |

**European Patent Office**

**EUROPEAN SEARCH REPORT**

Application Number

EP 06 12 7071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CORBAL J ET AL: "On the efficiency of reductions in /spl mu/-SIMD media extensions" PARALLEL ARCHITECTURES AND COMPILATION TECHNIQUES, 2001. PROCEEDINGS. 2001 INTERNATIONAL CONFERENCE ON 8-12 SEPT. 2001, PISCATAWAY, NJ, USA,IEEE, 8 September 2001 (2001-09-08), pages 83-94, XP010558950 ISBN: 0-7695-1363-8 * the whole document * | 1 | |

-----

**TECHNICAL FIELDS SEARCHED (IPC)**

The present search report has been drawn up for all claims

| Place of search | Date of completion of the search | Examiner |
|---|---|---|
| Munich | 23 February 2007 | Kamps, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 7071

This annex lists the patent family members relating to the patent documents cited in  the above-mentioned European search report.
The members are as contained in the European Patent Office EDP file on
The European Patent Office is in no way liable for these particulars which are merely given for the purpose of information.

23-02-2007

| Patent document cited in search report | | Publication date | Patent family member(s) | | Publication date |
|---|---|---|---|---|---|
| US 7085797 | B2 | 01-08-2006 | EP<br>US | 1338954 A2<br>2003163504 A1 | 27-08-2003<br>28-08-2003 |

For more details about this annex : see Official Journal of the European Patent Office, No. 12/82

**EP 1 936 492 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050132165 A